# EUROPEAN PATENT APPLICATION

(11) **EP 4 773 502 A1**
(43) Date of publication of application: **08.07.2026**
(21) Application number: 24860063.7
(22) Date of filing: 30.05.2024
(51) Int. Cl.: H02S 30/10, H02S 20/22

(54) **PHOTOVOLTAIC MODULE, PHOTOVOLTAIC APPARATUS AND MODULE COUPLING DEVICE**

(30) Priority: 30.08.2023 KR 20230114369
(71) Applicant: Research Institute of Industrial Science & Technology, Pohang-si, Gyeongsangbuk-do 37673 (KR)
(72) Inventor: KIM, Young-Su, Pohang-si, Gyeongsangbuk-do 37673 (KR); KIM, A-Rong, Pohang-si, Gyeongsangbuk-do 37673 (KR); TARK, Sung-Ju, Pohang-si, Gyeongsangbuk-do 37673 (KR)
(74) Representative: Kador & Partner Part mbB
(86) International application number: PCT/KR2024/007408
(87) International publication number: WO 2025/048138

(57) **Abstract**

The present invention relates to a photovoltaic module having a fastening part, or a photovoltaic apparatus including same, and a module coupling device. The photovoltaic apparatus according to one embodiment of the present invention comprises: a photovoltaic module including solar cells, an encapsulant, a cover layer, a metal layer and a fastening part; and a provision module including a load support part coupled in contact with the fastening part.

## Description

### Technical Field

The present disclosure relates to a photovoltaic module including a fastening unit and a photovoltaic apparatus including the same. More specifically, the present disclosure relates to a photovoltaic module that is easy to install on an installation object by incorporating a fastening unit within the photovoltaic module itself, or a photovoltaic apparatus including the same.

### Background Art

Building Integrated Photovoltaics (BIPV) may be a system installed on the external walls, roofs, or the like of buildings and may also perform a function of an exterior material of the buildings along with generating solar power, and may be one of methods for utilizing solar power in the city. However, in terms of building exterior materials, there is a problem with safety of electricity and/or fire due to the nature of the device that generates electricity to install a general solar power module on an external wall of a building. In addition, insulation performance as an exterior material is required to meet recent policies such as zero energy building, green building certification, or the like for carbon reduction worldwide.

Existing photovoltaic modules may include a front protective layer/second encapsulation layer/solar cell/first encapsulation layer/rear protective layer, and are unsuitable as building exterior materials because flames may spread in the event of a fire. In addition, polymer materials constituting the first and second encapsulation layers and the rear protective layer may generate harmful gases in the event of a fire, and may thus not satisfy non-combustible or semi-combustible performance as a building exterior finishing material.

Meanwhile, a steel plate or stainless steel (STS) as a building exterior or a finishing material is in the spotlight as an exterior material in modern architecture due to its having the ability to apply various designs thereto, a relatively long lifespan, high durability, ease of construction, or the like. In addition, steel plates, glass, or the like are non-combustible materials and do not diffuse flames in the event of a fire. Additionally, development of a lightweight photovoltaic module capable of expressing various colors and textures based on a steel plate is emerging as an important means to overcome limitations of existing solar and building solar systems.

In addition, existing building integrated solar systems may be mainly installed on the roof, and as disclosed in patent document of KR No. 10-2081060, an additional structure is installed on the existing roof structure to achieve insulation and watertightness, and a structure for disposing a solar module is constructed, and a general solar module may be installed thereon. As a result, a lot of reinforcement work is required on the roof, and the load thereon increases, making it difficult to secure economic feasibility through limited installation costs.

In order to overcome the problems, an integrated structure product was developed to perform a watertight function with an insulation material, as in KR No. 10-2016-0012686, but when a solar module is installed, it is combined through bolt fastening, so installation remains difficult.

Therefore, there is a need for a photovoltaic apparatus that is easy to install by solving the problems.

(Patent Document 1) Korean Patent Registration No. 10-1575177

### Disclosure of Invention

### Technical Problem

The purpose of the present disclosure is to solve the problems mentioned hereinbefore, and to provide a photovoltaic module with enhanced fire resistance and insulation performance, and a photovoltaic apparatus including thereof and may be installed and stably fixed with a mounting module.

In addition, one purpose of the present disclosure is to provide a photovoltaic module or a photovoltaic apparatus that may be installed neatly enough as an exterior material on an installation object such as a building or the like.

### Solution to Problem

The present disclosure provides a photovoltaic apparatus and a photovoltaic module, formed as follows, in order to achieve the purposes thereof.

A photovoltaic apparatus according to an embodiment of the present disclosure includes a photovoltaic module including a solar cell, an encapsulant formed to surround the solar cell, a cover layer protecting the solar cell on one side of the encapsulant, a metal layer protecting the solar cell on the other side of the encapsulant, and a fastening unit connected to the metal layer; and a mounting module including a lower support portion coupled to contact the fastening unit; wherein, when the cover layer, the encapsulant, and the metal layer are stacked in order, and a stacking direction thereof is a first direction, and a second direction is perpendicular to the first direction, in the fastening unit, a fastening plate intersecting the second direction is formed, a first slit formed to pass through the fastening plate and having a first angle with respect to a first surface, that is parallel to the first direction and the second direction, is included, and the lower support portion includes a coupling plate contacting the fastening plate, and a second slit formed to pass through the coupling plate and having a second angle with respect to the first surface.

In addition, the fastening plate may include a first fastening plate and a second fastening plate intersecting the first fastening plate, and the fastening unit includes a first space surrounded by the first fastening plate and the second fastening plate, and having a hollow interior.

In addition, the coupling plate may include a first coupling plate contacting the first fastening plate and a second coupling plate contacting the second fastening plate, and in some regions of the fastening plate adjacent to the first slit, and some regions of the coupling plate adjacent to the second slit, a 1-1 fastening surface of the first fastening plate close to the first space in the first direction and a 1-2 coupling surface of the first coupling plate far from the first space in the first direction may be coupled to contact each other, and a 2-1 fastening surface of the second fastening plate close to the first space in the first direction and a 2-2 coupling surface of the second coupling plate far from the first space in the first direction may be coupled to contact each other.

In addition, the fastening unit may further include an extension portion extending from the fastening plate while being horizontal to the second direction.

In addition, the a first through-hole penetrating through the coupling plate may be formed, a second through-hole penetrating through the fastening plate may be formed in a position corresponding to the first through-hole, and the photovoltaic apparatus may further include a coupling member coupled to the first through-hole and the second through-hole.

In addition, the coupling plate may further include an overlapping edge adjacent to a second slit and inclined in the first direction.

In addition, the fastening plate may be integrally formed with the metal layer by bending a metal plate forming the metal layer.

In addition, the first angle and the second angle may be formed in an opposite direction with respect to the first surface.

In addition, the first angle may be equal in degree to the second angle.

In addition, the fastening unit may further include:
a third fastening plate located between the first fastening plate and the second fastening plate and connected to the first fastening plate and the second fastening plate.

In addition, the metal layer may extend in the first direction to cover one surface of the encapsulant and the cover layer.

In addition, when viewed in the first direction, the second fastening plate may not overlap the metal layer. A photovoltaic module according to an embodiment of the present disclosure includes a solar cell; an encapsulant formed to surround the solar cell; a cover layer protecting the solar cell on one side of the encapsulant; a metal layer protecting the solar cell on the other side of the encapsulant; and a fastening unit connected to the metal layer, and including a fastening plate connected to the metal layer, and intersecting a first direction, a stacking direction in which the cover layer, the encapsulant, and the metal layer are stacked, and a second direction, perpendicular to the first direction, and a first slit formed to pass through the fastening plate.

In addition, the fastening unit may be integrally formed with the metal layer by bending a metal plate forming the metal layer.

A module coupling device according to an embodiment of the present disclosure is integrally formed with a metal layer included in a photovoltaic module, and includes a first edge protruding in a rear direction of the photovoltaic module and a second edge formed in a mounting module installed on an installation object and at least partially overlapping the first edge, and at least a portion of the first edge and at least a portion of the second edge are fixed to intersect.

### Advantageous Effects of Invention

According to an aspect of the present disclosure, Through the above-described structure, the present disclosure may firmly install a photovoltaic module having strength, fire safety, and electrical safety, equal to or higher than that of a building exterior material, on an installation object.

In addition, it is easy to install without necessarily requiring mechanical element fastening such as bolting.

In addition, a fastening unit, formed as a separate structure to combine with an installation object, may be integrated on a photovoltaic module to reduce material costs, simplify processes, and reduce weight.

### Brief Description of Drawings

FIG. 1 is a perspective view of a photovoltaic apparatus according to an embodiment of the present disclosure.
FIG. 2 is an exploded perspective view of a photovoltaic module according to an embodiment of the present disclosure.
FIG. 3 is a cross-sectional view of a photovoltaic module according to an embodiment of the present disclosure.
FIG. 4 is a perspective view of a mounting module according to an embodiment of the present disclosure.
FIG. 5 is a cross-sectional view taken along line A-A' shown in FIG. 1 in a state in which a photovoltaic module and a mounting module are separated according to an embodiment of the present disclosure.
FIG. 6 is a state diagram illustrating a state in which a photovoltaic module and a mounting module are coupled to each other in the state of FIG. 5, (a) is a state cross-sectional view at any one point in time moving in a third direction, and (b) is a state cross-sectional view in a state in which a photovoltaic module and a mounting module are completely coupled to each other.
FIG. 7 is a cross-sectional view taken along line B-B' shown in FIG. 6(a).
FIG. 8 is a cross-sectional view taken along line C-C' shown in FIG. 6(a).
FIG. 9 is a cross-sectional view of a photovoltaic apparatus according to an embodiment of the present disclosure.
FIG. 10 is a cross-sectional view of a photovoltaic apparatus according to an embodiment of the present disclosure.
FIG. 11 is a cross-sectional view taken along line D-D' illustrated in FIG. 10.
FIG. 12 is a cross-sectional view of a photovoltaic module according to another embodiment of the present disclosure.
FIG. 13 is a cross-sectional view of a photovoltaic module according to another embodiment of the present disclosure.
FIG. 14 is a cross-sectional view of a photovoltaic module according to another embodiment of the present disclosure.
FIG. 15 is a cross-sectional view of a photovoltaic module according to another embodiment of the present disclosure.

### Best Mode for the Invention

Hereinafter, a specific embodiment of the present disclosure will be described with reference to the accompanying drawings. However, the spirit of the present disclosure may not be limited to the embodiments presented, and those skilled in the art who understand the spirit of the present disclosure may easily propose other degenerative inventions or other embodiments included within the scope of the present disclosure by adding, changing, or deleting other components within the scope of the same spirit, but this may be also included within the scope of the present disclosure.

In the present specification, a 'front surface' of a layer or substrate refers to a surface in which sunlight is incident in a photovoltaic module, and a 'rear surface' of a layer or substrate refers to a surface opposite to the 'front surface' and not facing sunlight in a photovoltaic module.

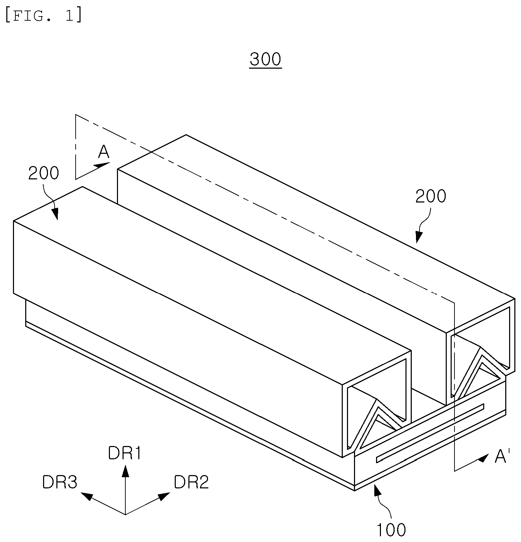

FIG. 1 is a perspective view of a photovoltaic apparatus according to an embodiment of the present disclosure.

A photovoltaic apparatus (300) according to an embodiment of the present disclosure may include a photovoltaic module (100) and a mounting module (200).

In the drawing, it is defined as a first direction (DR1), which may be a stacking direction of a stack structure of the photovoltaic module (100), a second direction (DR2) intersecting the first direction (DR1), and a third direction (DR3) intersecting the first direction (DR1) and the second direction (DR2).

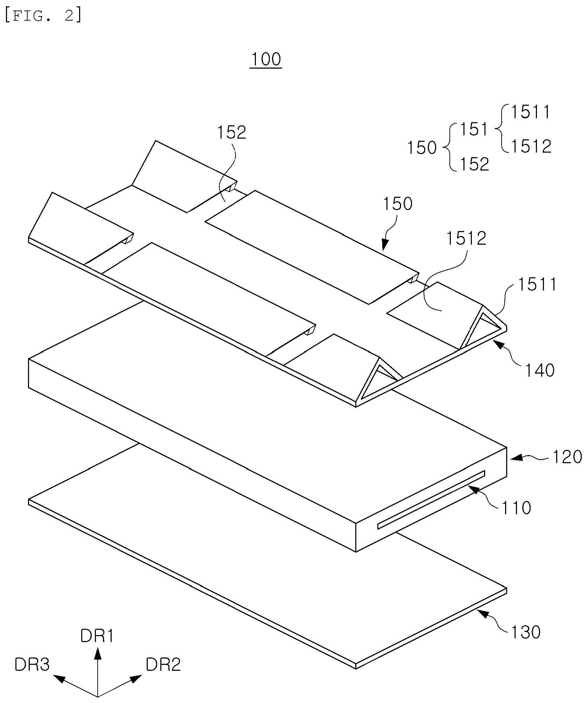

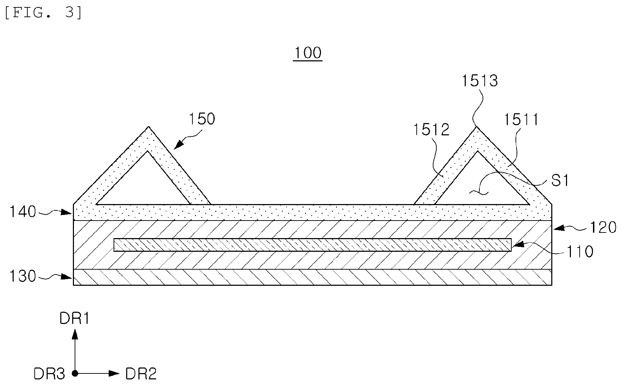

The photovoltaic module (100) may be a photovoltaic module (100) including a solar cell (110) (see FIGS. 2 and 3), including a metal layer (140) (see FIGS. 2 and 3) formed on a rear surface thereof, and integrated with the metal layer (140) (see FIGS. 2 and 3) formed together with a fastening unit (150) (see FIGS. 2 and 3).

The mounting module (200) may be a module that may be directly or indirectly coupled to an installation object in which the photovoltaic module (100) such as a building or the like is installed, and may be installed in combination with the photovoltaic module (100).

The photovoltaic apparatus (300) may include the photovoltaic module (100) and the mounting module (200), to facilitate installation of the photovoltaic module (100) and provide an effect of reducing an overall weight in an installed state.

FIGS. 2 and 3 illustrate a photovoltaic module according to an embodiment of the present disclosure. FIG. 2 illustrates an exploded perspective view of a photovoltaic module, and FIG. 3 illustrates a cross-sectional view of a photovoltaic module.

A photovoltaic module (100) according to an embodiment of the present disclosure may include a solar cell (110), an encapsulant (120), a cover layer (130), a metal layer (140), and a fastening unit (150).

In addition, the cover layer (130), the encapsulant (120), and the metal layer (140) may be stacked in the first direction (DR1) in order.

The solar cell (110) may convert light energy into electrical energy using a photoelectric conversion effect. The solar cell (110) may be formed as one layer, or a plurality of cells may be arranged as one layer.

The encapsulant (120) may protect the solar cell (110) from moisture. The encapsulant (120) may be formed to surround and cover the solar cell (110) such that the solar cell (110) may be sealed externally, and may be configured to be completely separated from the outside and sealed. The encapsulant (120) may be formed to surround an entire surface of the solar cell (110).

For example, the encapsulant (120) may be an encapsulant (120) formed of ethylene vinyl acetate (EVA), polyvinyl butyral (PVB), or a polyolefin elastomer (POE), but is not limited thereto.

The cover layer (130) or a cover window (hereinafter, referred to as a cover layer) may be a relatively hard layer formed on one side of the encapsulant (120). The photovoltaic module (100) may be a layer formed on a top end of the photovoltaic module (100), and may prevent contact between the outside and the encapsulant (120) to protect the solar cell (110) therein from external impact or the like.

The cover layer (130) may be formed on a front surface of the encapsulant (120), or another layer may be included between the cover layer (130) and the encapsulant (120), but light passes through the cover layer (130) and may be incident in an order of the encapsulant (120) and the solar cell (110).

The cover layer (130) may be made of a low iron content reinforced glass for sunlight or a fire-resistant polymer material, which may be a non-combustible material. The fire-resistant polymer material may be generally applied to the cover layer (130) of, for example, polydimethylsiloxane (PDMS), polychlorotrifluoroethylene (PCTFE), ethylene tetrafluoro-ethylene (EFE), ethylene-tetrafluoroethylene-hexafluoropropylene (PTFE), polytetrafluoroethylene (PE), polyester amide (PEA), fluorinated ethylene propylene (FEP), or the like (including inorganic flame-retardant materials such as silicone resins and mica and glass), but is not limited thereto. A thickness of the cover layer (130) may be a general thickness applied to the cover layer (130) of the photovoltaic module (100) in this technical field, and may be preferably 2 mm to 5 mm in terms of visible light transmission and intensity. It may be preferable in terms of photovoltaic power generation that the cover layer (130) has a transmittance of incident light rays of 85% or more. The higher the transmittance of the incident light rays, the better the power generation efficiency, and an upper limit of the transmittance is not limited.

The metal layer (140) may protect the solar cell (110) from the other side of the encapsulant (120).

The metal layer (140) may be formed on a rear surface of the encapsulant (120), or may include other layers or configurations between the encapsulant (120) and the metal layer (140). The metal layer (140) may be a layer formed on a rear surface of the photovoltaic module (100) except for the fastening unit (150), which will be described below.

For example, the metal layer (140) may be formed of a steel plate, which may be a non-combustible material, to ensure electrical safety and prevent harmful gases from being generated by firing the polymer constituting the encapsulant (120) of the photovoltaic module (100) in case of fire.

A high corrosion-resistant steel plate selected from the group consisting of a galvanized steel plate, a magnesium-zinc-aluminum plated steel plate, and a stainless steel plate may be used as the steel plate.

For example, when the metal layer (140) is a steel plate having a tensile strength of 270 MPa or more, a thickness may be 0.3 mm or more and 2.3 mm or less.

More preferably, the thickness of the metal layer (140) may be 0.3 mm or more and 1.6 mm or less.

In this case, 0.3 mm, which may be a minimum value of the metal layer (140), may be a value derived from the viewpoint of securing rigidity for self-support of the metal layer (140) and mass production for securing uniformity and flatness during steel sheet production. 1.6 mm, which may be a maximum value of the thickness of the metal layer (140), may be a value derived from the viewpoint of lightening the photovoltaic module (100).

By configuring the metal layer (140) to have a thickness of 0.3 mm or more, it is possible to secure flatness by preventing distortion or bending of the steel plate constituting the metal layer (140) during the manufacturing process of the photovoltaic module (100), and to stably secure rigidity such that defects that may occur during the manufacturing process of the photovoltaic module

(100) do not occur. In addition, by securing flatness, mass productivity of the photovoltaic module (100) may be stably secured.

By configuring the metal layer (140) to have a thickness of 0.3 mm or more, moisture penetration through the metal layer (140) may be prevented, and the metal layer

(140) may stably secure fire resistance performance of the photovoltaic module (100).

By configuring the metal layer (140) to have a thickness of 1.6 mm or less, the photovoltaic module (100) may be reduced in weight.

More preferably, the metal layer (140) may be configured with a steel plate having a tensile strength of 270 MPa or more, and may have a thickness in the range of 0.3 to 1.6 mm.

In addition, 270MPa, a minimum value of a tensile strength of the steel plate constituting the metal layer (140), may be derived from the viewpoint of mass productivity to secure rigidity for self-sustainability of the metal layer (140) and to secure uniformity and flatness during steel plate production.

The photovoltaic module (100) according to an embodiment of the present disclosure may include the metal layer (140) to be non-combustible even when a fire occurs. In addition, it is possible to provide an effect that weight reduction is possible.

The fastening unit (150) may include a fastening plate (151) and a first slit (152).

The fastening plate (151) may be connected to the metal layer (140) and intersected in the second direction (DR2).

For example, the fastening plate (151) may include a first fastening plate (1511) and a second fastening plate (1512) intersecting the first fastening plate (1511).

The first fastening plate (1511) may be connected at one end of the metal layer (140) and may extend in a direction, intersecting the second direction (DR2). Moreover, the second fastening plate (1512) may be formed in a direction, intersecting the first fastening plate (1511).

In addition, the first fastening plate (1511) or the second fastening plate (1512) may also cross the first direction (DR1) but may be parallel to the first direction (DR1).

For example, the first fastening plate (1511) and the second fastening plate (1512) may be connected to each other, and a first edge (1513), which may be a boundary, may be formed therebetween.

For example, the fastening unit (150) may include a first space (S1) surrounded by the first fastening plate (1511) and the second fastening plate (1512) and having a hollow interior.

The first fastening plate (1511) and the second fastening plate (1512) may be formed to overlap the metal layer (140) when viewed in the first direction (DR1). In this case, the first space (S1) surrounded by at least some surfaces of the first fastening plate (1511), the second fastening plate (1512), and the metal layer (140) may be formed.

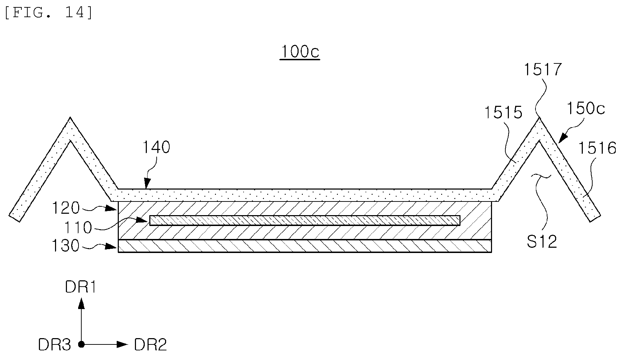

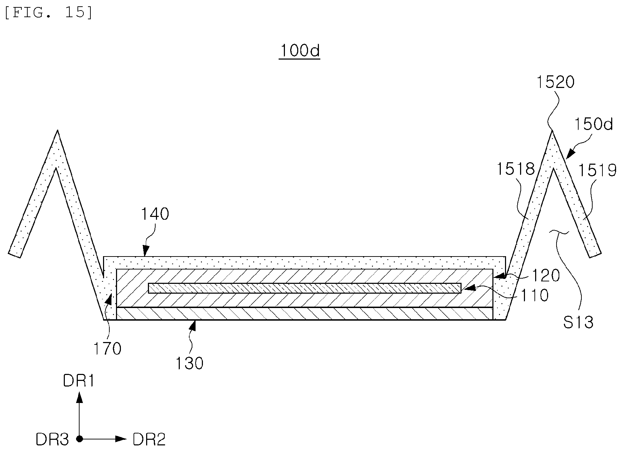

Hereinafter, referring to FIG. 14 or 15, the first space (S1) may be surrounded by the first fastening plate (1511) and the second fastening plate (1512) but may not be surrounded by the metal layer (140), which will be described in the contents related to the corresponding drawings.

For example, the fastening plate (151) may be integrally formed with the metal layer (140) by bending a metal plate material forming the metal layer (140).

The fastening unit (150) according to an embodiment of the present disclosure may be bent in both end portions of the metal plate material forming the metal layer (140) to form the fastening plate (151), but is not limited thereto.

The first fastening plate (1511) intersecting the second direction (DR2) may be formed by being primarily bent in one end portion of the metal layer (140), and a corresponding metal plate constituting the first fastening plate (1511) may be bent again to process the second fastening plate (1512) intersecting the first fastening plate (1511) integrally.

In addition, when the first fastening plate (1511) and the second fastening plate (1512) are continuously formed, the first edge (1513) to which the first fastening plate (1511) and the second fastening plate (1512) are connected may be formed.

Since the metal plate material may be formed by bending, a process of manufacturing a shape of the fastening plate (151) using a mold or coupling the fastening plate (151) to the metal layer (140) may not be required, thereby providing convenience in manufacturing and reducing costs.

Also, the fastening unit (150) may include the first slit (152).

The first slit (152) may be formed to pass through the fastening plate (151).

The photovoltaic module (100) and the mounting module (200) may be combined as a portion of a lower support portion (210) of the mounting module (200), which will be described later, is introduced into the first space (S1) through the first slit (152), and even when external force acts from the outside in the first direction (DR1) or the second direction (DR2), the combined state may not change easily, providing an effect that may be stably combined. An effect of being easily installed without special fastening or installation of a special structure may be also provided.

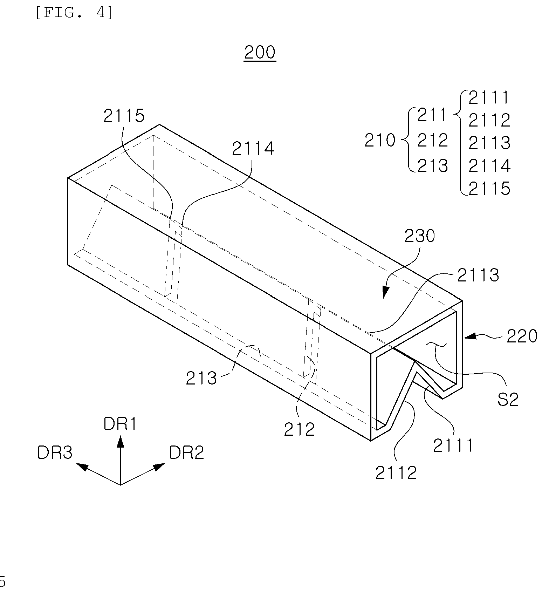

FIG. 4 illustrates a mounting module according to an embodiment of the present disclosure.

A mounting module (200) according to an embodiment of the present disclosure may include a lower support portion (210) coupled to a fastening unit (150).

The lower support portion (210) may include a coupling plate (211) and a second slit (212).

The coupling plate (211) may be located to contact a fastening plate (151) of a photovoltaic module (100).

For example, the coupling plate (211) may include a first coupling plate (2111) and a second coupling plate (2112).

The first coupling plate (2111) may be in contact with a first fastening plate (1511), and the second coupling plate (2112) may have a corresponding shape to contact a second fastening plate (1512).

The second slit (212) may be formed to pass through the coupling plate (211).

The lower support portion (210) may further include a flange surface (213) extending from the coupling plate (211). In addition, the mounting module (200) may further include a sidewall (220) extending in the first direction (DR1) from the flange surface (213) of the lower support portion (210), and a cover surface (230) connected to the sidewall (220).

In addition, a second space (S2) may be formed in the mounting module (200) within a closed cross-section formed by the coupling plate (211), the flange surface (213), the sidewall (220), and the cover surface (230).

In addition, as a portion of the fastening unit (150) is introduced into the second space (S2), the photovoltaic module (100) and the mounting module (200) may be combined.

According to an embodiment, the cover surface (230) may not be included in the mounting module (200), and in this case, the second space (S2) may be formed in an open state.

However, the mounting module (200) may not be specified as a structure such as a specific shape as long as it includes the coupling plate and the second slit (212) of the lower support portion (210). In addition, a material of the lower support portion (210) may be formed of a metal material, which may be the same as that of the metal layer (140), but is not limited thereto.

In addition, the coupling plate (211) may include a second edge (2113), a protruding portion (2114), and a gentle portion (2115).

The second edge (2113) may be formed between the first coupling plate (2111) and the second coupling plate (2112). In addition, the protruding portion (2114) protruding in the third direction (DR3) and the gentle portion (2115) in the third direction (DR3) may be included while cutting the second edge (2113) by the second slit (212).

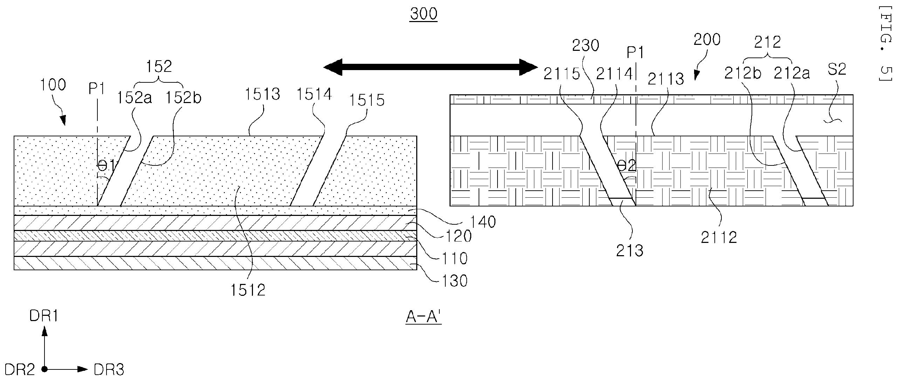

FIG. 5 illustrates a cross-sectional view taken along line A-A' shown in FIG. 1 in a state in which a photovoltaic module and a mounting module are separated according to an embodiment of the present disclosure.

The photovoltaic module (100) and the mounting module (200) may be coupled while moving any one thereof in the third direction (DR3), which may be an arrow direction of the drawing.

For example, the first slit (152) may be formed to have a first angle (θ1) with a first surface (P1), that is parallel to the first and second directions (DR1) and (DR2). In this case, the first angle (θ1) may be an angle greater than 0° and less than 90°.

For example, the second slit (212) may be formed to have a second angle (θ2) with the first surface (P1). In this case, the second angle (θ2) may be an angle greater than 0° and less than 90°.

In addition, the first slit (152) and the second slit (212) may be formed in different directions with respect to the first surface (P1).

For example, the first slit (152) may have a shape in which a gap is formed between a 1-1 cross-section (152a) and a 1-2 cross-section (152b). In addition, the 1-1 cross-section (152a) and the 1-2 cross-section (152b) may be parallel to each other, and may be formed to have the first angle (θ1) with the first surface (P1).

The second slit (212) may have a shape in which a gap is formed between a 2-1 cross-section (212a) and a 2-2 cross-section (212b). And the 2-1 cross-section (212a) and the 2-2 cross-section (212b) may be parallel to each other, and may be formed to have the second angle (θ2) with the first surface (P1).

When the coupling plate (211) and the fastening plate (151) are brought into contact with each other and then move in the third direction (DR3), the first slit (152) and the second slit (212) may meet, and the coupling plate (211) and the fastening plate (151) may be inserted into and coupled to each other. A portion of the fastening plate (151) may be coupled while being inserted toward the second space (S2) of the coupling plate (211) through the second slit (212).

In addition, since the first angle (θ1) and the second angle (θ2) have angles not to be parallel or perpendicular to the first surface (P1), it is possible to provide an effect that may not be easily separated even when external force is applied in the first direction (DR1), the second direction (DR2), or the third direction (DR3) while being combined with the mounting module (200) to be described below.

For example, the first angle (θ1) and the second angle (θ2) may be equal in degree .

In this case, even when external force acts on the fastening plate (151) and the coupling plate (211), the external force may be easily dispersed and coupling may be easily maintained. However, the first angle (θ1) and the second angle (θ2) may be different, and may be set to a design value considering convenience of coupling or maintenance of a coupling state.

For example, as the first slit (152) is formed in the fastening plate (151), a protruding portion (1514) protruding in the third direction (DR3) and a gentle portion (1515) unlike the protruding portion (1514) may be formed in the first edge (151).

In addition, the first edge (1513) and the second edge (2113) may be fixed while at least partially overlapping and at least partially intersecting each other. That is, the protruding portion (1514) of the first edge (1513) may cover a gentle portion of the second edge (2113) through the gentle portion (2115) of the second edge (2113), and the first edge (1513) and the second edge (2113) may intersect while at least partially overlapping each other. Alternatively, they may be combined in a direction opposite thereto.

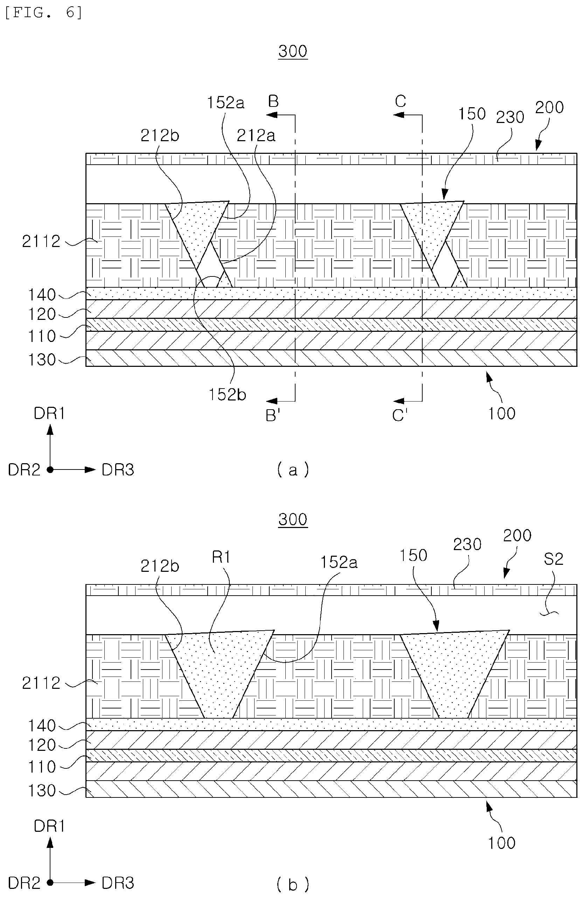

FIG. 6 is a state diagram illustrating a state in which a photovoltaic module and a mounting module are coupled to each other in the state of FIG. 5, (a) is a state cross-sectional view at any one point in time moving in a third direction, and (b) is a state cross-sectional view in a state in which a photovoltaic module and a mounting module are completely coupled to each other.

Referring to FIG. 6, when the second slit (212) and the first slit (152) meet, a portion of the fastening unit (150) may be inserted into the second space (S2) through the second slit (212), and in that state, the maximum moving distance may move in the third direction (DR3) by the interval of the first slit (152). A surface connected to the 1-1 cross-section (152a) in the first slit (152) may be inserted into the second space (S2) through the second slit (212), and a surface connected to the 1-2 cross-section (152b) may be maintained in the same state as before being coupled.

In addition, the 2-1 cross-section (212a) of the second slit (212) may be at least partially covered by the surface to which the 1-1 cross-section (152a) of the first slit (152) is connected, and in the maximum combined state, the 1-2 cross-section (152b) of the first slit (152) and the 2-1 cross-section (212b) of the second slit (212) may be located close to the second space (S2).

As described above, a partial surface of the fastening plate (151) may be fitted into the second space (S2), such that a partial region (R1) may be observed in the second space (S2).

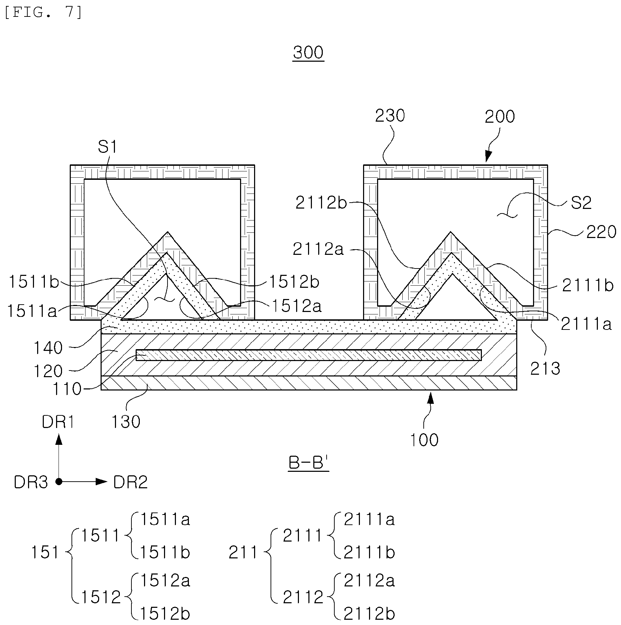

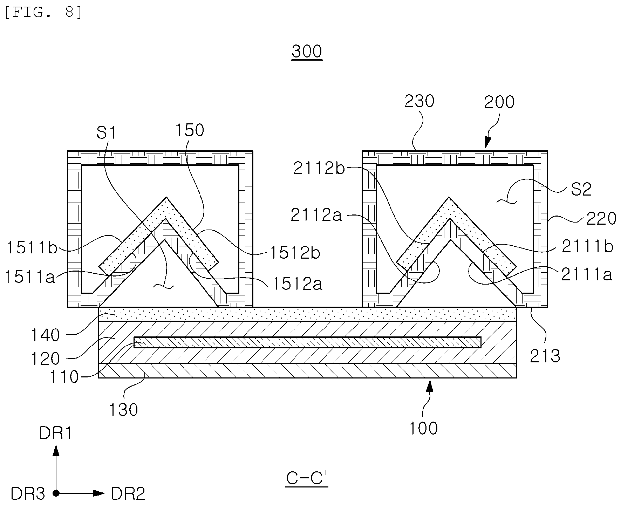

FIG. 7 is a cross-sectional view taken along line B-B' shown in FIG. 6(a), and FIG. 8 is a cross-sectional view taken along line C-C' shown in FIG. 6(a).

For example, the first fastening plate (1511) may include a 1-1 fastening surface (1511a) and a 1-2 fastening surface (1511b), and the second fastening plate (1512) may include a 2-1 fastening surface (1512a) and a 2-2 fastening surface (1512b). A surface close to the first space (S1) with respect to the first space (S1) may be the 1-1 fastening surface (1511a) and the 2-1 fastening surface (1512a), and a surface not formed to be in contact with the first space (S1) may be the 1-2 fastening surface (1511b) and the 2-2 fastening surface (1512b).

For example, the first coupling plate (2111) may include a 1-1 coupling surface (2111a) and a 1-2 coupling surface (2111b), and the second coupling plate (2112) may include a 2-1 coupling surface (2112a) and a 2-2 coupling surface (2112b). In a coupled state, the 1-1 coupling surface (2111a) and the 2-1 coupling surface (2112a), which may be surfaces close to the first space (S1) of the fastening unit (150) in the first direction (DR1), and the 1-2 coupling surface (2112a) and the 2-2 coupling surface (2111b), which may be surfaces relatively far from the first space (S1) in the first direction (DR1), may be formed.

A cross-section in B-B', which may be a portion in which the first slit (152) and the second slit (212) are not formed, may be a state in which the lower support portion (210) is in contact with the fastening unit (150) of the photovoltaic module (100) in the first direction (DR1) and the mounting module (200) is located. In this case, the 1-2 fastening surface (1511b) and the 1-1 coupling surface (2111a) may be in contact with each other, and the 2-2 fastening surface (1512b) and the 2-1 coupling surface (2112a) may be in contact with each other.

A cross-section in C-C', which may be a portion in which the first slit (152) and the second slit (212) are formed, may have a shape in which the photovoltaic module (100) is coupled to the mounting module (200) such that a portion of the fastening unit (150) is introduced into the second space (S2). On this cross-section, the 1-2 fastening surface (1511b) and the 1-1 coupling surface (2111a) may be in contact with each other, and the 2-2 fastening surface (1512b) and the 2-1 coupling surface (2112a) may be in contact with each other.

Since the fastening unit (150) and the lower support portion (210), formed of a relatively solid material, may be inserted with elastic restoring force in some regions, a coupling force between t two modules may be largely formed, and may not be easily separated by external force.

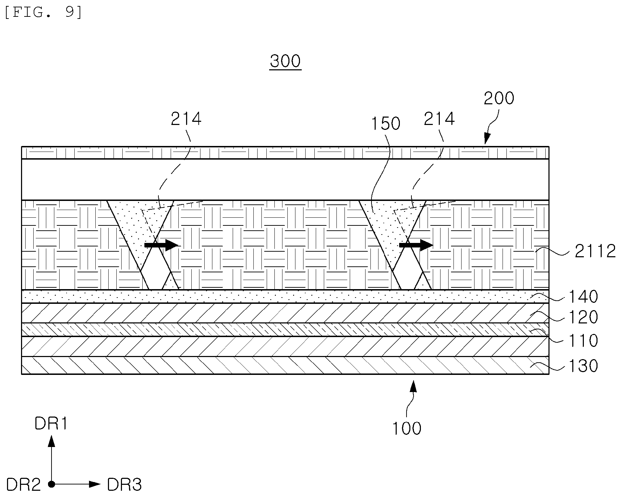

FIG. 9 illustrates a photovoltaic apparatus according to an embodiment of the present disclosure, illustrates a cross-section as shown in FIG. 6, and illustrates a case in which a coupling plate includes an overlapping edge.

In a photovoltaic apparatus (300) according to an embodiment of the present disclosure, a coupling plate (211) may further include an overlapping edge (214) adjacent to a second slit (212) and inclined in the first direction (DR1).

The overlapping edge (214) may be formed adjacent to the second slit (212) and may be inclined in the first direction (DR1) to be fitted along a slope when a fastening unit (150) is coupled, thereby providing an effect of easier coupling.

It is possible to provide effects that the overlapping edge (214) of a lower support portion (210) is formed at a point in which it meets a front end formed by a first slit (152) of the fastening unit (150) to be inserted and completely coupled.

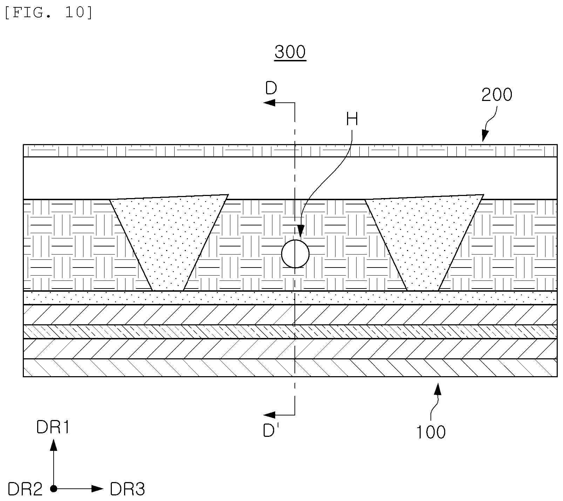

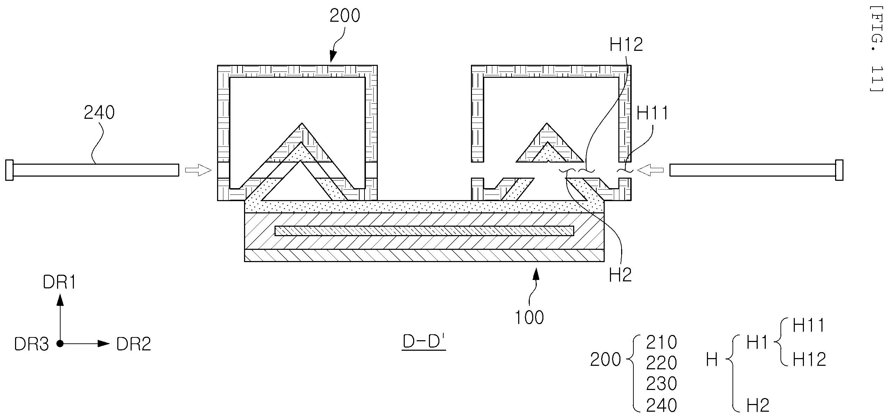

FIG. 10 illustrates a photovoltaic apparatus according to an embodiment of the present disclosure, and illustrates a cross-section as shown in FIG. 6, but illustrates a state in which a through-hole may be formed. FIG. 11 is a cross-sectional view taken along line D-D' illustrated in FIG. 10, and illustrates that a coupling member may be coupled to the cross-section. In FIG. 11, some lines will be omitted for convenience of partial notation.

A mounting module (200) according to an embodiment of the present disclosure may further include a coupling member 240.

For example, a through-hole (H) may be formed, and the coupling member 240 may be coupled to the through-hole (H). The through-hole (H) may include a first through-hole (H1) and a second through-hole (H2). The first through-hole (H1) may be formed to pass through a coupling plate (211), and the second through-hole (H2) may be formed to pass through a fastening plate (151).

The first through-hole (H1) may be sufficient to include a through-hole (H12) penetrating through the coupling plate (211), but may further include a through-hole (H11) penetrating a side surface of a lower support portion (210) for convenience of coupling.

The coupling member (240) may be coupled to the through-hole (H), and thus, even when external force is applied in a state in which the mounting module (200) and a photovoltaic module (100) are coupled, they may not be separated. In addition, the first through-hole (H1) formed in the lower support portion (210) and the second through-hole (H2) formed in a fastening unit (150) may be correspondingly formed such that the coupling member (240) is coupled in a completely coupled state, thereby providing an effect of knowing a degree of coupling during coupling.

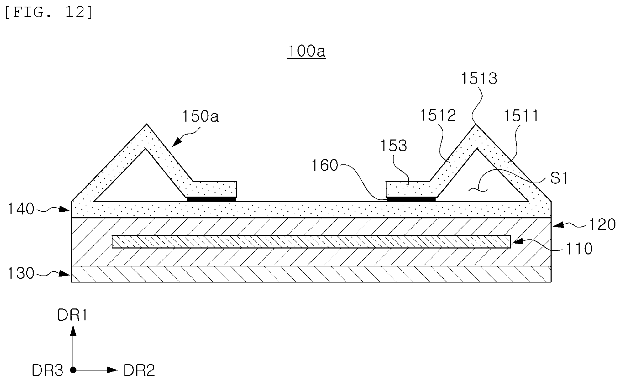

Hereinafter, FIGS. 12 to 15 describe photovoltaic modules (100a, 100b, 100c, and 100d) of the embodiment including various types of fastening units (150a, 150b, 150c, and 150d), and the contents different from the may be cited, according to the corresponding description. In addition, the photovoltaic apparatus (300) may include photovoltaic modules (100a, 100b, 100c, and 100d) of the embodiment described below.

FIG. 12 illustrates a photovoltaic module including an extension portion, as a photovoltaic module according to another embodiment of the present disclosure.

In a photovoltaic module (100a) according to another embodiment of the present disclosure, a fastening unit (150a) may further include an extension portion (153) extending from a fastening plate (151) and horizontal to the second direction (DR2), and a surface of the extension portion (153) and a surface of a metal layer (140) may be coupled by an adhesive (160).

When the fastening unit (150) receives external force in the first direction (DR1), an extension portion extending from the fastening plate (151) in the second direction (DR2) may be further included to stably maintain a shape thereof.

In addition, the extension portion may be integrally formed by bending a metal plate of the metal layer (140) like the fastening plate (151).

The surface of the extension portion (153) and the surface of the metal layer (140) may be coupled by the adhesive, or may be coupled by a general coupling means such as welding or the like, rather than the adhesive.

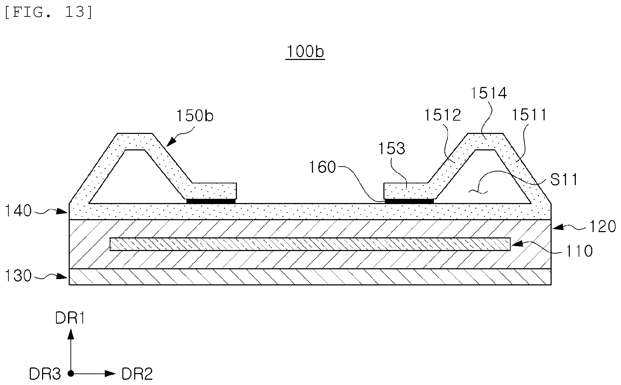

FIG. 13 illustrates a photovoltaic module according to another embodiment of the present disclosure.

According to an embodiment of the present disclosure, a fastening plate (151) of a fastening unit (150b) of a photovoltaic module (100b) may further include a third fastening plate (1514) connecting a first fastening plate (1511) and a second fastening plate (1512).

The third fastening plate (1514) may be formed through additional bending in addition to a bending process for forming the first fastening plate (1511) and the second fastening plate (1512), and may be provided such that a first space (S11) has a rectangular cross-section by further including one bending process. However, a shape of the first space (S11) may vary depending on the number of bending process, and may not be limited to having a triangle such as the above-described embodiment or a tetragon such as the present embodiment.

FIG. 14 illustrates a photovoltaic module according to another embodiment of the present disclosure.

According to an embodiment of the present disclosure, a fastening unit (150c) of a photovoltaic module (100c) may be formed such that at least a portion of a metal layer (140) and the fastening unit (150) do not overlap when viewed in the first direction (DR1) according to a bending processing direction of an end portion of the metal layer (140). In this case, a first fastening plate (1515) may be formed by bending to the outside of the photovoltaic module (100) in the second direction (DR2). Then, a second fastening plate (1516) may be formed at the outside once again thereafter, and a first edge (1517) connecting the first fastening plate (1515) and the second fastening plate (1516) may be formed. In this case, a first space (S12) may form an open space in the first direction (DR1) without being covered by the metal layer (140).

FIG. 15 illustrates a photovoltaic module according to another embodiment of the present disclosure.

According to an embodiment of the present disclosure, a photovoltaic module (100d) may be integrally formed with a metal layer (140), and the metal layer (140) may further include a side cover (170) extending in the first direction (DR1) to cover one surface of an encapsulant (120) and a cover layer (130), and a fastening unit (150d) may be formed such that at least a portion of the metal layer (140) and the fastening unit (150) do not overlap when viewed in the first direction (DR1) as in the embodiment of FIG. 14.

In this case, a first fastening plate (1518) may be formed from a point closer to the front surface in the first direction (DR1) than in the above-described embodiments. Thereafter, a second fastening plate (1519) may be formed by being bent again, and a first edge (1520) connecting the first fastening plate (1518) and the second fastening plate (1519) may be formed. Even in this case, a first space (S13) may form a space that may be open in the first direction (DR1) without being covered by the metal layer (140).

Hereinafter, a module coupling apparatus cites all descriptions of the photovoltaic apparatus described above.

A module coupling device according to an embodiment of the present disclosure may include a first edge (1513) and a second edge (2113).

For example, it may include the first edge (1513) integrally formed with a metal layer (140) included in a solar module and protruding from a photovoltaic module (100) to a rear side, the second edge (2113) formed in a mounting module (200) installed on an installation object and at least partially overlapping the first edge (1513) and at least a portion of the first edge (1513) and the second edge (2113) may cross and be fixed.

The following description will refer to FIG. 5. The module coupling device may be fixed while the first edge (1513) formed in the photovoltaic module (100) and the second edge (2113) included in the mounting module are in contact with each other and at least a portion thereof crosses each other.

For example, a protruding portion (1514) formed in a cut portion of the first edge (1513) may cross through a gentle portion (2115) formed in a cut portion of the second edge (2113) and cover at least a portion of the protruding portion (2115) formed in the cut portion of the second edge (2113). Accordingly, even when a force acts in the first direction (DR1), it may be firmly fixed.

Although the present disclosure has been described based on embodiments, the present disclosure may not be limited to the above-described embodiments, and may be modified and implemented by those skilled in the art without changing the technical idea of the present disclosure claimed in the claims.

## Claims

1. A photovoltaic apparatus comprising:
a photovoltaic module including a solar cell, an encapsulant formed to surround the solar cell, a cover layer protecting the solar cell on one side of the encapsulant, a metal layer protecting the solar cell on the other side of the encapsulant, and a fastening unit connected to the metal layer; and
a mounting module including a lower support portion coupled to contact the fastening unit;
wherein, when the cover layer, the encapsulant, and the metal layer are stacked in order, and a stacking direction thereof is a first direction, and a second direction is perpendicular to the first direction,
in the fastening unit,
a fastening plate intersecting the second direction is formed,
a first slit formed to pass through the fastening plate and having a first angle with respect to a first surface that is parallel to the first direction and the second direction, is included and
the lower support portion includes:
a coupling plate contacting the fastening plate, and a second slit formed to pass through the coupling plate and having a second angle with respect to the first surface.

2. The photovoltaic apparatus of claim 1, wherein the fastening plate includes a first fastening plate and a second fastening plate intersecting the first fastening plate, and
the fastening unit includes a first space surrounded by the first fastening plate and the second fastening plate, and having a hollow interior.

3. The photovoltaic apparatus of claim 2, wherein the coupling plate includes:
a first coupling plate contacting the first fastening plate and a second coupling plate contacting the second fastening plate, and
in some regions of the fastening plate adjacent to the first slit, and some regions of the coupling plate adjacent to the second slit,
a 1-1 fastening surface of the first fastening plate close to the first space in the first direction and a 1-2 coupling surface of the first coupling plate far from the first space in the first direction are coupled to contact each other, and a 2-1 fastening surface of the second fastening plate close to the first space in the first direction and a 2-2 coupling surface of the second coupling plate far from the first space in the first direction are coupled to contact each other.

4. The photovoltaic apparatus of claim 1, wherein the fastening unit further includes an extension portion extending from the fastening plate while being horizontal to the second direction.

5. The photovoltaic apparatus of claim 3, wherein, a first through-hole penetrating through the coupling plate is formed,
a second through-hole penetrating through the fastening plate is formed in a position corresponding to the first through-hole, and
the photovoltaic apparatus further includes a coupling member coupled to the first through-hole and the second through-hole.

6. The photovoltaic apparatus of claim 3, wherein the coupling plate further includes an overlapping edge adjacent to a second slit and inclined in the first direction.

7. The photovoltaic apparatus of claim 1, wherein the fastening plate is integrally formed with the metal layer by bending a metal plate forming the metal layer.

8. The photovoltaic apparatus of claim 1, wherein the first angle and the second angle are formed in an opposite direction with respect to the first surface.

9. The photovoltaic apparatus of claim 8, wherein the first angle is equal in degree to the second angle.

10. The photovoltaic apparatus of claim 2, wherein the fastening unit further includes a third fastening plate located between the first fastening plate and the second fastening plate and connected to the first fastening plate and the second fastening plate.

11. The photovoltaic apparatus of claim 1, wherein the metal layer extends in the first direction to cover one surface of the encapsulant and the cover layer.

12. The photovoltaic apparatus of claim 2, wherein, when viewed in the first direction, the second fastening plate does not overlap the metal layer.

13. A photovoltaic module comprising:
a solar cell;
an encapsulant formed to surround the solar cell;
a cover layer protecting the solar cell on one side of the encapsulant;
a metal layer protecting the solar cell on the other side of the encapsulant; and
a fastening unit connected to the metal layer, and including a fastening plate connected to the metal layer, and intersecting a first direction, a stacking direction in which the cover layer, the encapsulant, and the metal layer are stacked, and a second direction, perpendicular to the first direction, and a first slit formed to pass through the fastening plate.

14. The photovoltaic module of claim 13, wherein the fastening unit is integrally formed with the metal layer by bending a metal plate forming the metal layer.

15. A module coupling device integrally formed with a metal layer included in a photovoltaic module, including a first edge protruding in a rear direction of the photovoltaic module and a second edge formed in a mounting module installed on an installation object and at least partially overlapping the first edge, and at least a portion of the first edge and at least a portion of the second edge are fixed to intersect.
